# EUROPÄISCHE PATENTSCHRIFT

(11) **EP 1 379 793 B1**
(45) Veröffentlichungstag und Bekanntmachung des Hinweises auf die Patenterteilung: **11.10.2006**
(21) Anmeldenummer: 02710849.7
(22) Anmeldetag: 08.02.2002
(51) Int. Cl.: F16D 3/78

(54) **KUPPLUNG ZUM VERBINDEN ZWEIER BAUTEILE**
COUPLING FOR CONNECTING TWO COMPONENTS
SYSTEME D'ACCOUPLEMENT DE DEUX COMPOSANTS

(30) Priorität: 14.04.2001 DE 10118562
(43) Veröffentlichungstag der Anmeldung: 14.01.2004
(73) Patentinhaber: Wittenstein AG, 97999 Igersheim (DE)
(72) Erfinder: BAYER, Thomas, 97999 Igersheim (DE); OLD, Christof, 97980 Bad Mergentheim (DE)
(74) Vertreter: Weiss, Peter
(86) Internationale Anmeldenummer: PCT/EP2002/001320
(87) Internationale Veröffentlichungsnummer: WO 2002/084134

(56) Entgegenhaltungen:
- EP-A- 0 627 571
- GB-A- 2 244 763
- US-A- 5 407 386

## Beschreibung

Die vorliegende Erfindung betrifft eine Kupplung zum Verbinden zweier Bauteile, als Klemmnabe mit einer Zentriernabe, wobei zwischen den beiden Bauteilen ein axial verformbares Element vorgesehen ist.

Derartige Kupplungen sind in vielfälltigster Form und Ausführung im Markt bekannt und erhältlich. Meist sind sie als starre Kupplungen, als drehstarre Ausgleichskupplungen bekannt, um ein einleitendes Drehmoment von einem Bauteil auf ein zweites Bauteil zu übertragen.

Nachteilig ist jedoch, dass herkömmliche Kupplungen, was beispielsweise Klauenkupplungen betrifft, in der Herstellung äusserst teuer sind.

Ferner ist nachteilig, dass bei herkömmlichen Kupplungen ein Drehmoment nicht spielfrei von einem Bauteil auf ein zweites Bauteil übertragen werden kann. Dies ist insbesondere beim Anschliessen an hochpräzise Getriebe, Servomotoren od. dgl. erforderlich. Zudem ist nachteilig, dass eine lineare radiale Führung der zu verbindenden Bauteile meist spielbehaftet ist, was ebenfalls unerwünscht ist.

Ferner sind im Stand der Technik Faltenbalgkupplungen bekannt, die einen grossen Einbauraum erfordern, lang ausgebildet und teuer in der Herstellung sind. Sie verhindern eine kompakte Einbauweise und gewährleisten keinesfalls eine Zentrierung. Sie weisen drei Freiheitsgrade auf, was nicht erwünscht ist.

Die US 5,407,386 offenbart eine Wellen-Nabenverbindung, wobei zwischen den beiden zu verbindenden Bauteilen eine Kupplung vorgesehen ist. Diese Kupplung dient lediglich dem axialen Längenausgleich.

Die GB 2 244 763 A offenbart eine Kupplung, bei welcher zwischen zwei Bauteilen ein zweiteilig ausgebildeter Balg eingesetzt ist.

Der vorliegenden Erfindung liegt die Aufgabe zugrunde, eine Kupplung der eingangs genannten Art zu schaffen, welche die genannten Nachteile beseitigt und mit welcher auf sehr kostengünstige, einfache und effektive Weise spielfrei und absolut präzise ein Drehmoment von einem Bauteil auf ein zweites Bauteil übertragbar ist, wobei eine Längenänderung beispielsweise durch thermische Ausdehnung des ein oder anderen Bauteiles in axialer Richtung ausgeglichen werden soll.

Ferner soll absolut spielfrei ein radiales Drehmoment nahezu torsionssteif von einem Bauteil auf ein zweites Bauteil übertragen werden. Zudem soll eine derartige Kupplung wartungs- und verschleissfrei und insbesondere kostengünstig herzustellen sein.

Zur Lösung dieser Aufgabe führen die Merkmale des Patentanspruches 1.

Bei der vorliegenden Erfindung ist zwischen zwei Bauteilen, insbesondere zwischen zwei Klemmnaben und einer Zentriernabe zur Bildung der Kupplung das Element eingesetzt und insbesondere verschweisst. Das Element ist als Balg vorzugsweise U-artig ausgebildet und weist zwei Ringkreiselemente auf, die stirnseitig mit einem U-artigen Verbindungselement verbunden sind. Zwischen den beiden Ringkreiselementen ist ein Spalt gebildet. Das Element wird vorzugsweise stirnseitig mit einerseits dem ersten und andererseits dem zweiten Bauteil fest verschweisst. Vorzugweise wird über den vollständigen Umfang das Element mit den Bauteilen lasergeschweisst.

Hierdurch entsteht eine verdrehsteife radiale Verbindung bzw. Kupplung der Bauteile miteinander, so dass diese spielfrei radial und verdrehsteif gegeneinander bewegt werden können.

Bei der vorliegenden Erfindung ist von Vorteil, dass durch eine derartige Kupplung ein äusserst kurzer Bauraum realisiert werden kann. Diese Kupplung erlaubt gleichzeitig mit und/oder ohne Führungselement, Führungshülse od. dgl. eine radiale Zentrierung. Diese bleibt auch permanent gewährleistet. Zudem lässt sich zwischen den beiden Bauteilen über das zentrierende Element, welches eine axiale Bewegung zulässt, gleichzeitig eine Zentrierung vornehmen. Dies ist ein wesentlicher Vorteil bei der vorliegenden Erfindung.

Insbesondere bei hochpräzisen Bauteilen, wie beispielsweise Planetengetriebe, wie sie in der DE 44 01 164.4 beschrieben sind, dient ein elektrischer Antrieb, Servomotor od. dgl. als Antriebselement, welches das Drehmoment sehr präzise über eine Klemmnabe einleitet. Da die Klemmnabe über das Element, insbesondere den Balg, als Kupplung mit dem zweiten Bauteil bzw. einer Zentriernabe drehfest verbunden ist, lassen sich durch die entsprechende Form des Elementes die Bauteile bzw. Klemmnabe gegenüber Zentriernabe axial hin und her bewegen. Dies ist insbesondere dann erforderlich, wenn beispielsweise die Zentriernabe als Bauteil eines Getriebeelementes durch thermische Ausdehnung und Erwärmung ihre Länge ändert. Gleichzeitig kann bei Erwärmung der Antriebswelle einer Antriebseinheit eines beispielsweise Elektro- oder Servomotors eine Längenänderung bzw. Dillatation der Klemmnabe bzw. der Antriebswelle des Motors erfolgen. Über den entsprechenden Spalt des Elementes lässt sich dann eine entsprechende derartige Dillatation ausgleichen.

Ferner hat es sich als vorteilhaft erwiesen, zusätzlich eine lineare radiale Führung der beiden Bauteile gegeneinander vorzusehen, indem beispielsweise ein Absatz eines ersten Bauteiles in einen entsprechend dafür vorgesehenen Hohlwellenabsatz passgenau eingreift, wobei stirnseitig ein Ausgleichsspalt gebildet ist. Anstelle eines Absatzes können auch Zentrierhülsen, Zentrierstifte od.dgl. vorgesehen sein, um eine radiale Verschiebung bzw. Bewegung der Bauteile auszuschliessen. Diese sind lediglich axial gegeneinander bewegbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Darstellung einer Kupplung zum Verbinden einer Klemmnabe mit einer Zentriernabe;
Figur 2 einen Längsschnitt durch die Kupplung, Klemmnabe und Zentriernabe gemäss Figur 1;
Figur 3 einen vergrössert dargestellten Ausschnitt des Teillängsschnittes im Bereich der Kupplung gemäss Figur 2;
Figur 4a und Figur 4c einen Teillängsschnitt durch ein weiteres Ausführungsbeispiel der Kupplung mit Klemmnabe und Zentriernabe mit und ohne radialer Führung;
Figur 4b einen Teillängsschnitt gemäss Figur 4a als weiteres Ausführungsbeispiel;
Figur 5 eine Draufsicht auf die Kupplung gemäss den Figuren 1 bis 4b;
Figur 6 einen Teillängsschnitt durch ein weiteres Ausführungsbeispiel einer weiteren Kupplung nebst radialer Führung.

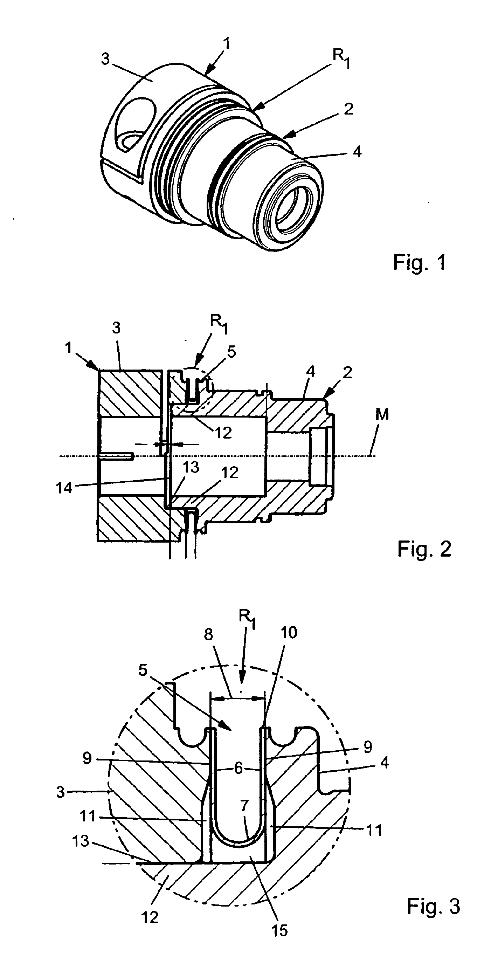

Gemäss Figur 1 verbindet eine Kupplung R₁ ein erstes Bauteil 1 mit einem zweiten Bauteil 2, wobei im bevorzugten Ausführungsbeispiel das Bauteil 1 als Klemmnabe 3 und das Bauteil 2 als Zentriernabe 4 ausgebildet ist. Klemmnabe 3 und Zentriernabe 4 werden über die Kupplung R₁ miteinander verbunden.

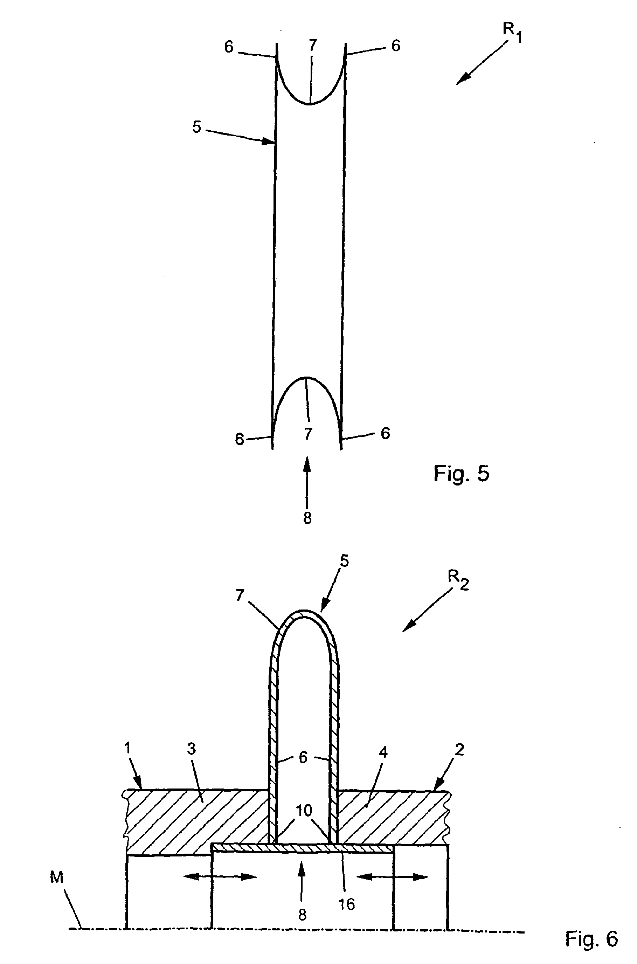

Dabei weist die Kupplung R₁ ein Element 5 auf, welches als Balg ausgebildet ist. Ferner weist das Element 5 zwei Ringkreiselemente 6 auf, wie sie in den Figuren 2 und 3 angedeutet sind, und die vorzugsweise parallel und axial nebeneinander angeordnet sind. Stirnseitig sind nach innen zu einer Mittelachse M hin gerichtet über ein Verbindungselement 7 (siehe Figur 5) die Ringkreiselemente 6 miteinander verbunden. Bevorzugt bestehen Ringkreiselemente 6 und Verbindungselemente 7 aus einem Bauteil, welches querschnittlich U-artig ausgebildet ist. Vorzugsweise ist das Element 5 kreisringartig ausgebildet, wobei zwischen den Ringkreiselementen 6 ein Spalt 8 gebildet ist.

Im bevorzugten Ausführungsbeispiel sind aussen liegende Kreisringflächen 9 und/oder Stirnseiten 10 des Elementes 5 mit jeweils dem Bauteil 1, 2 bzw. Klemmnabe 3 und Zentriernabe 4 fest verschweisst. Vorzugsweise erfolgt die Verschweissung über den vollständigen Umfang. Es kann jedoch auch eine Stirnseite 10 zumindest teilweise umlaufend, vorzugsweise vollständig umlaufend, mit einends der Klemmnabe 3 und andernends der Zentriernabe 4 fest verschweisst, insbesondere lasergeschweisst sein. Auf diese Weise entsteht eine Kupplung R₁, bei welcher die Bauteile 1, 2 fest, unwiederlösbar und verdrehfest miteinander verbunden sind.

Es hat sich ferner als besonders vorteilhaft erwiesen, insbesondere im Bereich des Verbindungselementes 7 des Elementes 5 stirnseitig in Klemmnabe 3 und Zentriernabe 4 jeweils eine Ausnehmung 11 vorzusehen, so dass beim axialen Bewegen von Bauteil 1 gegen Bauteil 2 sich das Element 5 minimal zusammendrücken lässt. Dabei bleibt insbesondere der Bereich des Verbindungselementes 7 und ein Teilbereich der Ringkreiselemente 6 durch die Ausnehmungen 11 frei liegend.

Ein bedeutender Vorteil bei der vorliegenden Erfindung ist, dass durch die vollständige radiale Festlegung der Ringkreiselemente 6 an den Bauteilen 1, 2 das Element 5 äusserst hohe Drehmomente von der Klemmnabe 3 auf die Zentriernabe 4 zum Einsetzen bzw. Anflanschen beispielsweise in oder an ein Getriebe übertragen kann.

Damit gleichzeitig eine exakte Führung beim axialen Bewegen von Bauteil 1 gegenüber Bauteil 2 gewährleistet ist, greift ein Wellenabsatz 12 der Zentriernabe 4 in einen entsprechenden Hohlwellenabsatz 13 der Klemmnabe 3 passgenau ein. Dabei ist stirnseitig zwischen dem Wellenabsatz 12 und dem Hohlwellenabsatz 13 ein Ausgleichsspalt 14 gebildet. Hierdurch wird gewährleistet, dass eine exakte Führung beider Bauteile 1, 2 in axialer Richtung gewährleistet bleibt.

Im Rahmen der vorliegenden Erfindung soll jedoch auch liegen, dass beispielsweise ein entsprechender Absatz unterhalb des Elementes 5 von der Klemmnabe 3 ab und in einen entsprechenden, hier nicht bezifferten Hohlwellenabsatz der Zentriernabe 4 eingreift.

Ferner ist zwischen dem Absatz 12 und dem Element 5, wie es insbesondere aus Figur 3 hervorgeht, ein Freiraum 15 gebildet.

Auch ist von Vorteil bei der vorliegenden Erfindung, dass beispielsweise eine hier nicht dargestellte Antriebswelle, beispielsweise eines Elektromotors, in die Klemmnabe 3 eingreifen kann. Auch soll daran gedacht sein, eine Antriebswelle nicht nur in die Klemmnabe 3, sondern auch in die Zentriernabe 4 einzuführen.

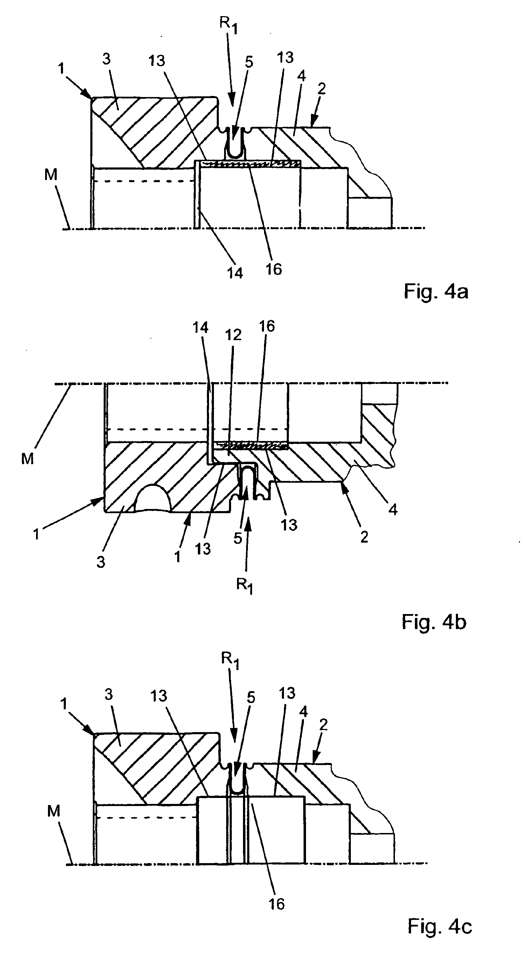

In einem weiteren Ausführungsbeispiel der vorliegenden Erfindung gemäss Figur 4a ist die Kupplung R₁, insbesondere das Element 5, in oben beschriebener Weise mit den Bauteilen 1 und 2 bzw. mit Klemmnabe 3 und Zentriernabe 4 verbunden. Unterschiedlich ist, dass im Bereich des Elementes 5, Klemmnabe 3 und Zentriernabe 4, die vorzugsweise ebenfalls als Hohlwelle ausgebildet sind, jeweils einen Hohlwellenabsatz 13 aufweisen, in welchen eine Zentrierhülse 16 passgenau eingesteckt und stirnseitig zur Klemmnabe 3 hin, der Ausgleichsspalt 14 gebildet ist. Dabei kann eine hier nicht dargestellte Antriebswelle in die Klemmnabe 3 und gegebenenfalls noch in die Zentriernabe 4 eingreifen.

In Figur 4c ist eine Kupplung R₁ aufgezeigt, die in etwa dem Ausführungsbeispiel gemäss Figur 4a entspricht. Jedoch ist hier keine Zentrierhülse 16 vorgesehen, da das Element 5 selbstzentrierend ausgebildet ist. Diese Ausführungsform gewährleistet ebenfalls einen sehr kurzen Einbauraum und eine Zentrierung beider Bauteile gegeneinander in radialer Richtung.

Gemäss dem Ausführungsbeispiel nach Figur 4b ist der Wellenabsatz 12 in den Hohlwellenabsatz 13 der Klemmnabe 3 eingeführt. Zwischen Absatz 12 und Klemmnabe 3 ist stirnseitig der Ausgleichsspalt 14 gebildet. Eine weitere Besonderheit ist hier, dass im stirnseitigen Bereich, insbesondere im Bereich des Wellenabsatzes 12, ein weiterer Hohlwellenabsatz 13 in der Zentriernabe 4 vorgesehen ist, der eine Zentrierhülse 16 aufnimmt. Dabei kann eine hier nicht näher dargestellte Antiebswelle im Bereich von Klemmnabe 3 und Zentriernabe 4 im Bereich der Zentrierhülse 16 aufgenommen werden, um eine zusätzliche axiale Führung für das Bewegen der Bauteile 1, 2 gegeneinander zu gewährleisten.

In Figur 5 ist als Draufsicht das Element 5, insbesondere die Kupplung R₁, dargestellt, die vorzugweise ringartig ausgebildet ist.

Figur 6 zeigt ein weiteres Ausführungsbeispiel einer Kupplung R₂, die als Element 5 ebenfalls aus Kreisringelementen 6 besteht, die jedoch mit einem nach aussen liegenden Verbindungselement 7 stirnseitig verbunden sind. Der Spalt 8 ist nach innen gerichtet. Zur radialen Zentrierung kann im Bereich des Elementes 5 die Zentrierhülse 16 in oben beschriebener Weise eingesetzt sein. Anstelle der Zentrierhülse 16 können auch Zentrierstifte od. dgl. Elemente zur radialen Zentrierung und Führung der Bauteile 1, 2 vorgesehen sein. Hierauf soll die Erfindung nicht beschränkt sein.

**Positionszahlenliste**

| | | | | | |
|---|---|---|---|---|---|
| 1 | Bauteil | 34 | | 67 | |
| 2 | Bauteil | 35 | | 68 | |
| 3 | Klemmnabe | 36 | | 69 | |
| 4 | Zentriernabe | 37 | | 70 | |
| 5 | Element | 38 | | 71 | |
| 6 | Ringkreiselement | 39 | | 72 | |
| 7 | Verbindungselement | 40 | | 73 | |
| 8 | Spalt | 41 | | 74 | |
| 9 | Kreisringfläche | 42 | | 75 | |
| 10 | Stirnseite | 43 | | 76 | |
| 11 | Ausnehmung | 44 | | 77 | |
| 12 | Wellenabsatz | 45 | | 78 | |
| 13 | Hohlwellenabsatz | 46 | | 79 | |
| 14 | Ausgleichsspalt | 47 | | | |
| 15 | Freiraum | 48 | | | |
| 16 | Zentrierhülse | 49 | | | |
| 17 | | 50 | | R₁ | Kupplung |
| 18 | | 51 | | R₂ | Kupplung |
| 19 | | 52 | | | |
| 20 | | 53 | | | |
| 21 | | 54 | | | |
| 22 | | 55 | | | |
| 23 | | 56 | | | |
| 24 | | 57 | | M | Mittelachse |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kupplung zum Verbinden zweier Bauteile (1, 2), bestehend aus den Bauteilen Klemmnabe (3) und Zentriernabe (4), wobei zwischen den beiden Bauteilen (1, 2) ein axial verformbares Element (5) vorgesehen ist, wobei das einteilige, im Querschnitt U-förmige Element (5) radial steif zwischen den Bauteilen (1, 2) eingesetzt und beidseitig radial verschweisst ist, wobei stirnseitig in der Klemmnabe (3) und in der Zentriernabe (4) eine Ausnehmung (11) gebildet ist, und die Bauteile (1, 2) zueinander axial bewegbar und radial zentriert sind, wobei zum radialen Zentrieren von Klemmnabe (3) gegenüber Zentriernabe (4) zumindest teilweise die Klemmnabe (3) in die Zentriernabe (4) oder die Zentriernabe (4) in die Klemmnabe (3) passgenau axial eingreift und gegenüber dieser axial verschiebbar gelagert ist.

2. Kupplung nach Anspruch 1, **dadurch gekennzeichnet, dass** das Element (5) aus zwei axial zueinander beabstandeten Ringkreiselementen (6) gebildet ist, welche stirnseitig radial innen oder aussen über das im Querschnitt U-förmige Verbindungselement (7) umlaufend miteinander verbunden sind, so dass zwischen den beiden Ringkreiselementen (6) ein radial nach außen oder innen offener Spalt (8) gebildet ist.

3. Kupplung nach Anspruch 1 oder 2, **dadurch gekennzeichnet, dass** das Element (5) als ringartiger Balg ausgebildet ist.

4. Kupplung nach einem der Ansprüche 2 oder 3, **dadurch gekennzeichnet, dass** das erste Ringkreiselement (6) mit der Klemmnabe (3) und das zweite Ringkreiselement (6) mit der Zentriernabe (4) verschweisst ist.

5. Kupplung nach einem der Ansprüche 1 bis 4, **dadurch gekennzeichnet, dass** eine Stirnseite (10) und/oder eine im stirnseitigen Bereich liegende Ringkreisfläche (9) des Elements (5) zumindest teilweise umlaufend mit der Klemmnabe (3) und der Zentriernabe (4) verschweisst ist.

6. Kupplung nach wenigstens einem der Ansprüche 1 bis 5, **dadurch gekennzeichnet, dass** die Ausnehmung (11) im Bereich des Verbindungselementes (7) stirnseitig in der Klemmnabe (3) und der Zentriernabe (4) gebildet ist, und in diesem Bereich das Verbindungselement (7) axial zur Klemmnabe (3) und Zentriernabe (4) beabstandet ist.

7. Kupplung nach wenigstens einem der Ansprüche 1 bis 6, **dadurch gekennzeichnet, dass** zur radialen Zentrierung zwischen Klemmnabe (3) und Zentriernabe (4) eine Zentrierhülse (16) passgenau eingesetzt und eine axiale Bewegung von Klemmnabe (3) gegenüber Zentriernabe (4) mit dazwischen eingesetztem Element (5) über einen Ausgleichsspalt (14) zugelassen ist.

8. Kupplung nach Anspruch 7, **dadurch gekennzeichnet, dass** Klemmnabe (3) und Zentriernabe (4) als Hohlwelle ausgebildet sind, wobei zur Zentrierung ein Wellenabsatz (12) der Zentriernabe (4) in einem entsprechenden Hohlwellenabsatz (13) der Klemmnabe (3) zur radialen Zentrierung eingreift und stirnseitig zwischen Wellenabsatz (12) und Klemmnabe (3) der Ausgleichsspalt (14) gebildet ist.

## Claims

1. Coupling for connecting two components (1, 2), comprising the components clamping hub (3) and centring hub (4), wherein between the two components (1, 2) an axially deformable element (5) is provided, wherein
the one-piece, in cross section U-shaped element (5) is inserted radially stiffly between the components (1, 2) and connected radially by welding on both sides, wherein in the end face of the clamping hub (3) and the centring hub (4) a recess (11) is formed, and the components (1, 2) are axially movable and radially centred relative to one another, wherein for the radial centring of clamping hub (3) relative to centring hub (4) at least partially the clamping hub (3) engages into the centring hub (4) or the centring hub (4) engages the clamping hub (3) axially in a tight-fitting manner and is mounted axially displaceably relative thereto.

2. Coupling according to claim 1, **characterized in that** the element (5) is formed from two axially spaced-apart annular elements (6), which are connected to one another circumferentially at the radially inside or outside end by the in cross section U-shaped connection element (7), thereby forming between the two annular elements (6) a gap (8) that is open in a radially outward or inward direction.

3. Coupling according to claim 1 or 2, **characterized in that** the element (5) is designed as ring-like bellows.

4. Coupling according to one of claims 2 or 3, **characterized in that** the first annular element (6) is welded to the clamping hub (3) and the second annular element (6) is welded to the centring hub (4).

5. Coupling according to one of claims 1 to 4, **characterized in that** an end (10) and/or an annular surface (9) of the element (5) that is situated in the end region is welded at least partially circumferentially to the clamping hub (3) and the centring hub (4).

6. Coupling according to at least one of claims 1 to 5, **characterized in that** the recess (11) is formed in the region of the connection element (7) in the end of the clamping hub (3) and the centring hub (4), and in said region the connection element (7) is spaced axially apart from the clamping hub (3) and centring hub (4).

7. Coupling according to at least one of claims 1 to 6, **characterized in that** for radial centring between clamping hub (3) and centring hub (4) a centring sleeve (16) is inserted in a tight-fitting manner and an axial movement of clamping hub (3) relative to centring hub (4) with element (5) inserted therebetween is allowed by means of a compensation gap (14).

8. Coupling according to claim 7, **characterized in that** clamping hub (3) and centring hub (4) are designed as a hollow shaft, wherein for centring a shaft shoulder (12) of the centring hub (4) engages in a corresponding shaft shoulder (13) of the clamping hub (3) for radial centring and the compensating gap (14) is formed between the ends of shaft shoulder (12) and clamping hub (3).

## Revendications

1. Système d'accouplement de deux composants (1, 2) composé du moyeu de serrage des composants (3) et du moyeu de centrage (4), entre les deux composants (1, 2) étant prévu un élément déformable axialement (5),
l'élément d'une seule pièce (5), de section en forme de U, étant placé rigidement et radialement entre les composants (1, 2) et soudé radialement des deux côtés, du côté frontal étant formé, dans le moyeu de serrage (3) et dans le moyeu de centrage (4), un évidement (11), et les composants (1, 2) étant déplaçables axialement l'un par rapport à l'autre et centrés radialement, en vue du centrage radial du moyeu de serrage (3) par rapport au moyeu de centrage (4), le moyeu de serrage (3) pénétrant, au moins partiellement, axialement et de manière ajustée dans le moyeu de centrage (4), ou le moyeu de centrage (4) dans le moyeu de serrage (3), et étant monté de manière déplaçable axialement par rapport à ce dernier.

2. Système d'accouplement selon la revendication 1, **caractérisé par le fait que** l'élément (5) est formé de deux éléments annulaires axialement distants l'un de l'autre (6) qui sont reliés entre eux en pourtour du côté frontal, radialement intérieurement ou extérieurement par l'intermédiaire de l'élément de connexion à section en forme de U (7), de sorte qu'entre les deux éléments annulaires (6) soit formé un interstice (8) s'ouvrant radialement vers l'extérieur ou vers l'intérieur.

3. Système d'accouplement selon la revendication 1 ou 2, **caractérisé par le fait que** l'élément (5) est réalisé sous forme de soufflet en forme d'anneau.

4. Système d'accouplement selon l'une des revendications 2 ou 3, **caractérisé par le fait que** le premier élément annulaire (6) est assemblé par soudure au moyeu de serrage (3) et le deuxième élément annulaire (6) au moyeu de centrage (4).

5. Système d'accouplement selon l'une des revendications 1 à 4, **caractérisé par le fait qu'**une face frontale (10) et/ou une surface annulaire (9), située dans la zone frontale, de l'élément (5) est partiellement assemblée par soudure en pourtour au moyeu de serrage (3) et au moyeu de centrage (4).

6. Système d'accouplement selon l'une des revendications 1 à 5, **caractérisé par le fait que** l'évidement (11) est formé à l'endroit de l'élément de connexion (7), du côté frontal dans le moyeu de serrage (3) et dans le moyeu de centrage (4), et qu'à cet endroit l'élément de connexion (7) est distant axialement du moyeu de serrage (3) et du moyeu de centrage (4).

7. Système d'accouplement selon l'une des revendications 1 à 6, **caractérisé par le fait que** pour le centrage radial entre le moyeu de serrage (3) et le moyeu de centrage (4) est introduit de manière ajustée un manchon de centrage (16) et est permis un mouvement axial, par l'intermédiaire d'un interstice de compensation (14), du moyeu de serrage (3) par rapport au moyeu de centrage (4) avec l'élément (5) placé entre eux.

8. Système d'accouplement selon la revendication 7, **caractérisé par le fait que** le moyeu de serrage (3) et le moyeu de centrage (4) se présentent sous forme d'arbre creux, pour le centrage pénétrant un talon d'arbre (12) du moyeu de centrage (4) dans un décrochement d'arbre creux correspondant (13) du moyeu de serrage (3) en vue du centrage radial et du côté frontal étant formé, entre le talon d'arbre (12) et le moyeu de serrage (3), l'interstice de compensation (14).
